# EUROPEAN PATENT APPLICATION

(11) **EP 4 345 523 A1**
(43) Date of publication of application: **03.04.2024**
(21) Application number: 23194573.4
(22) Date of filing: 31.08.2023
(51) Int. Cl.: G02B 13/00, G02B 27/10, G02B 27/12, H04N 23/55, H04N 23/58

(54) **DUAL OPTICAL MAGNIFICATION CAMERA**

(30) Priority: 29.09.2022 US 202263411407 P; 16.03.2023 US 202318122463
(71) Applicant: Meta Platforms Technologies, LLC, Menlo Park, CA 94025 (US)
(72) Inventor: YANG, Dongmin, Menlo Park, 94025 (US)
(74) Representative: Murgitroyd & Company

(57) **Abstract**

A camera assembly with two distinct magnifications is described. The camera assembly includes a lens assembly with two modules to perceive light. The first module includes two halves of different lens assemblies disposed together to provide two different optical paths and fields of view to obtain the two different optical magnifications. The second module includes a lens assembly common to the two halves of the first module. A biprism provides light separation for the two halves of the first module. Thus, light received and subjected to two different magnifications in the first module at a distal end of the camera assembly is further processed through the second module before being provided to a sensor. The biprism at the camera's distal end keeps the two different lens assemblies of the first module at the same viewing direction.

## Description

### TECHNICAL FIELD

This patent application relates generally to camera devices, and in particular, to miniature cameras with split optical elements to provide dual optical magnification in a single camera.

### BACKGROUND

With recent advances in technology, prevalence and proliferation of content creation and delivery has increased greatly in recent years. In particular, interactive content such as virtual reality (VR) content, augmented reality (AR) content, mixed reality (MR) content, and content within and associated with a real and/or virtual environment (e.g., a "metaverse") has become appealing to consumers.

To facilitate delivery of this and other related content, service providers have endeavored to provide various forms of wearable display systems. One such example may be a head-mounted display (HMD) device, such as a wearable eyewear, a wearable headset, or eyeglasses. Head-mounted display devices (HMDs) require smaller size, weight, and limited power consuming components. Thus, there may be a trade-off between capabilities of various display and detection components used in a head-mounted display (HMD) device and their physical characteristics.

### SUMMARY

In accordance with a first aspect of the present disclosure, there is provided a camera assembly, comprising: a first magnification module comprising a first set of at least one partial optical lens; a second magnification module comprising a second set of at least one partial optical lens, wherein the first set of the at least one partial optical lens and the second set of the at least one partial optical lens are aligned along their respective cut lines; a common magnification module comprising a third set of at least one complete optical lens, wherein the common magnification module is arranged to receive light from the first magnification module and the second magnification module; and a sensor to receive light from the common magnification module.

In some embodiments, the camera assembly further comprising a biprism to adjust fields of view (FOVs) of the first magnification module and the second magnification module to overlap at least partially.

In some embodiments, the first set of the at least one partial optical lens and the second set of the at least one partial optical lens comprise half-cut optical lenses.

In some embodiments, the first magnification module provides a first magnification of an object, the second magnification module provides a second magnification of the object, and the camera assembly further comprises a processor to select among the first magnification of the object and the second magnification of the object.

In some embodiments, the processor is further to display the first magnification of the object and the second magnification of the object side-by-side vertically.

In some embodiments, the processor is further to display the first magnification of the object and the second magnification of the object side-by-side horizontally.

In some embodiments, the first set of the at least one partial optical lens, the second set of the at least one partial optical lens, and the third set of the at least one complete optical lens each comprise a concave optical lens, a convex optical lens, a plano-concave optical lens, a plano-convex optical lens, or a concave-convex optical lens.

In some embodiments, at least one of the first magnification module, the second magnification module, or the common magnification module comprise at least one of an optical filter, a polarizer, or a quarter wave plate.

In some embodiments, the third set of the at least one complete optical lens is to provide at least one of spherical aberration correction, chromatics aberration correction, distortion correction, or flattening.

In accordance with a second aspect of the present disclosure, there is provided a method comprising: receiving light from an overlapping area of two distinct fields of view (FOVs) at a biprism; providing a first magnification to the received light through a first magnification module comprising a first set of at least one partial optical lens; providing a second magnification to the received light through a second magnification module comprising a second set of at least one partial optical lens, wherein the first set of the at least one partial optical lens and the second set of the at least one partial optical lens are aligned along their respective cut lines; providing the light with the first magnification and the light with the second magnification to a sensor through a common magnification module comprising a third set of at least one complete optical lens.

In some embodiments, the method further comprising: providing one or more of spherical aberration correction, chromatics aberration correction, distortion correction, or flattening through the common magnification module.

In some embodiments, the first set of the at least one partial optical lens and the second set of the at least one partial optical lens are half-cut optical lenses.

In some embodiments, the method further comprising: selecting among two images generated from the light with the first magnification and the light with the second magnification.

In some embodiments, the method further comprising: displaying the two images generated from the light with the first magnification and the light with the second magnification side-by-side vertically or horizontally.

In accordance with a third aspect of the present disclosure, there is provided a lens assembly, comprising: a first magnification module comprising a first set of at least one partial optical lens; a second magnification module comprising a second set of at least one partial optical lens, wherein the first set of the at least one partial optical lens and the second set of the at least one partial optical lens are aligned along their respective cut lines; and a common magnification module comprising a third set of at least one complete optical lens, wherein the common magnification module is arranged to receive light from the first magnification module and the second magnification module, and to provide the light to a camera sensor.

In some embodiments, the lens assembly further comprising a biprism to adjust fields of view (FOVs) of the first magnification module and the second magnification module to overlap at least partially.

In some embodiments, the first set of the at least one partial optical lens and the second set of the at least one partial optical lens comprise half-cut optical lenses.

In some embodiments, the first magnification module provides a first magnification of an object, and the second magnification module provides a second magnification of the object such that the first magnification of the object and the second magnification of the object are selectable for presentation.

In some embodiments, the first magnification of the object and the second magnification of the object are displayable side-by-side vertically or horizontally.

In some embodiments, the third set of the at least one complete optical lens is to provide at least one of spherical aberration correction, chromatics aberration correction, distortion correction, or flattening.

### BRIEF DESCRIPTION OF DRAWINGS

Features of the present disclosure are illustrated by way of example and not limited in the following figures, in which like numerals indicate like elements. One skilled in the art will readily recognize from the following that alternative examples of the structures and methods illustrated in the figures can be employed without departing from the principles described herein.
Figure 1 illustrates a perspective view of a near-eye display in the form of a head-mounted display (HMD) device, according to an example.
Figure 2 illustrates a functional block diagram of a camera with various operational blocks, according to an example.
Figures 3A-3C illustrate distinct and common optical components of a camera for two different optical magnifications, a combination of the optical components into a single camera assembly, and different magnification views that may be achieved, according to an example.
Figure 4 illustrates two different lens configurations for distinct optical magnifications and a common lens configuration to be used in combination with the two different lens configurations, according to an example.
Figure 5A illustrates two different lens configurations for distinct optical magnifications, according to an example.
Figure 5B illustrates a combination of two different lens configurations for distinct optical magnifications and a common lens configuration, according to an example.
Figure 6 illustrates a flow diagram of a method for providing two distinct magnifications in a single camera, according to some examples.

### DETAILED DESCRIPTION

For simplicity and illustrative purposes, the present application is described by referring mainly to examples thereof. In the following description, numerous specific details are set forth in order to provide a thorough understanding of the present application. It will be readily apparent, however, that the present application may be practiced without limitation to these specific details. In other instances, some methods and structures readily understood by one of ordinary skill in the art have not been described in detail so as not to unnecessarily obscure the present application. As used herein, the terms "a" and "an" are intended to denote at least one of a particular element, the term "includes" means includes but not limited to, the term "including" means including but not limited to, and the term "based on" means based at least in part on.

Miniature cameras are used in portable devices such as smart watches, augmented reality / virtual reality (AR/VR) glasses, smart phones, etc. To achieve optical magnification (zoom) in such devices may be difficult due to limited envelop restrictions, no moving parts preference for reliability concerns, and/or power consumption restrictions. Additional challenges in miniature camera design may include high image quality and low light performance requirements, production yield, and cost concerns. Some implementations employ two or more individual cameras with different focal lengths and switch images among the cameras to provide different optical magnifications.

In some examples of the present disclosure, a camera assembly with two distinct magnifications is described. The camera assembly may include a lens assembly with two modules to perceive light. The first module may include two halves of different lens assemblies disposed together to provide two different optical paths and fields of view to obtain the two different optical magnifications. The second module may include a lens assembly common to the two halves of the first module. A biprism may provide light separation for the two halves of the first module. Thus, light received and subjected to two different magnifications in the first module at a distal end of the camera assembly may be further processed through the second module before being provided to a sensor. The biprism at the camera's distal end may keep the two different lens assemblies of the first module at the same viewing direction.

While some advantages and benefits of the present disclosure are apparent, other advantages and benefits may include providing two distinct optical magnifications without moving parts, thus higher reliability, lower power consumption, high image quality and low light performance, and/or reduced cost.

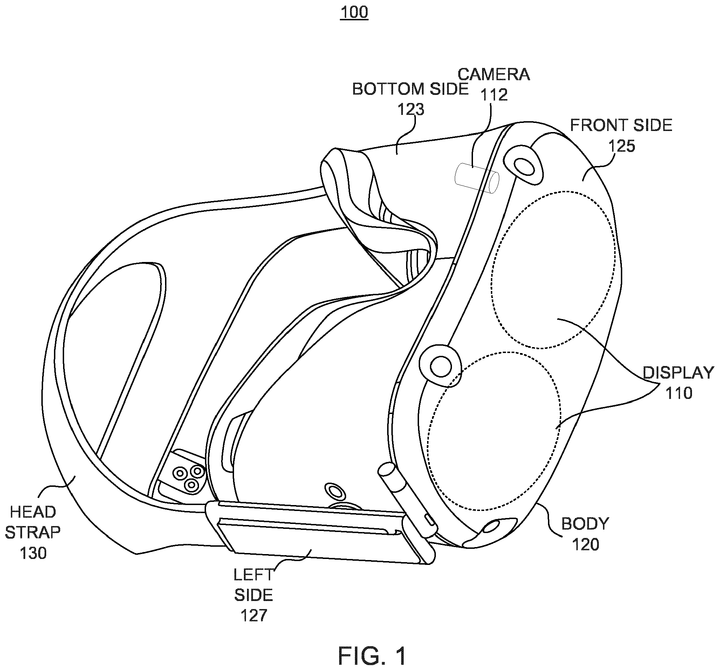

Figure 1 illustrates a perspective view of a near-eye display in the form of a head-mounted display (HMD) device 100, according to an example. In some examples, the head-mounted device (HMD) device 200 may be a part of a virtual reality (VR) system, an augmented reality (AR) system, a mixed reality (MR) system, another system that uses displays or wearables, or any combination thereof. In some examples, the head-mounted display (HMD) device 100 may include a body 120 and a head strap 130. Figure 1 shows a bottom side 123, a front side 125, and a left side 127 of the body 120 in the perspective view. In some examples, the head strap 130 may have an adjustable or extendible length. In particular, in some examples, there may be a sufficient space between the body 120 and the head strap 130 of the head-mounted display (HMD) device 100 for allowing a user to mount the head-mounted display (HMD) device 100 onto the user's head. For example, the length of the head strap 130 may be adjustable to accommodate a range of user head sizes. In some examples, the head-mounted display (HMD) device 100 may include additional, fewer, and/or different components.

In some examples, the head-mounted display (HMD) device 100 may present, to a user, media or other digital content including virtual and/or augmented views of a physical, real-world environment with computer-generated elements. Examples of the media or digital content presented by the head-mounted display (HMD) device 100 may include images (e.g., two-dimensional (2D) or three-dimensional (3D) images), videos (e.g., 2D or 3D videos), audio, or any combination thereof. In some examples, the images and videos may be presented to each eye of a user by one or more display assemblies (display 110) enclosed in the body 120 of the head-mounted display (HMD) device 100.

In some examples, the head-mounted display (HMD) device 100 may include various sensors (not shown), such as depth sensors, motion sensors, position sensors, and/or eye tracking sensors. Some of these sensors may use any number of structured or unstructured light patterns for sensing purposes. In some examples, the head-mounted display (HMD) device 00 may include an input/output interface for communicating with a console. In some examples, the head-mounted display (HMD) device 100 may include a virtual reality engine (not shown) that may execute applications within the head-mounted display (HMD) device 100 and receive depth information, position information, acceleration information, velocity information, predicted future positions, or any combination thereof of the head-mounted display (HMD) device 100 from the various sensors.

In some examples, a projector mounted in a display system may be placed near and/or closer to a user's eye (i.e., "eye-side"). In some examples, and as discussed herein, a projector for a display system shaped liked eyeglasses may be mounted or positioned in a temple arm (i.e., a top far corner of a lens side) of the eyeglasses. It should be appreciated that, in some instances, utilizing a back-mounted projector placement may help to reduce size or bulkiness of any required housing required for a display system, which may also result in a significant improvement in user experience for a user.

In some examples, in a near-eye display system, light from a surrounding environment may traverse a "see-through" region of a waveguide display (e.g., a transparent substrate) to reach a user's eyes. For example, in a near-eye display system, light of projected images may be coupled into a transparent substrate of a waveguide, propagate within the waveguide, and be coupled or directed out of the waveguide at one or more locations to replicate exit pupils and expand the eye box.

In other examples, images of the surrounding environment may be captured by a camera 112 integrated to the head-mounted display (HMD) device 100. The camera 112 may include a number of optical, electronic, and/or mechanical components. In some cases, the images of the surrounding environment may be captured at different magnification levels, for example, based on user selection. For high image quality purposes, optical magnification (zoom) may be used in place of or in addition to electronic magnification.

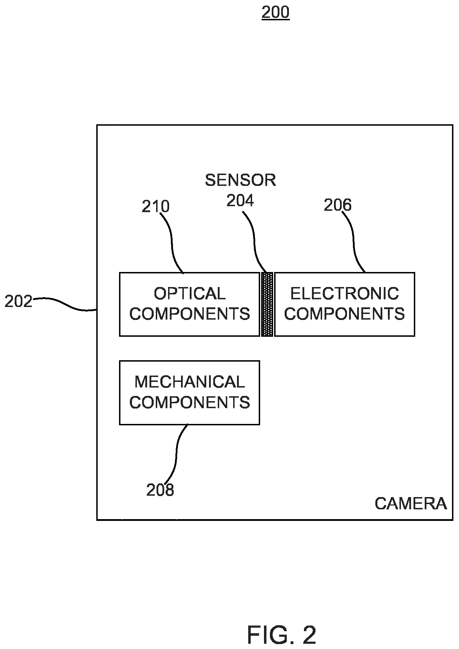

Figure 2 illustrates a functional block diagram of a camera with various operational blocks, according to an example. Diagram 200 shows a camera 202 with optical components 210, a sensor 204, electronic components 206, and mechanical components 208.

The optical components 210 may include one or more optical lenses, optical filters, phase plates, polarizers, and other optical elements to process light received be the camera 202. The electronic components 206 may include one or more processors, amplifiers, analog-digital converters (ADCs), digital signal processors (DSPs), and other electrical components, for example, controllers to manage operations of some of the optical and/or mechanical components (e.g., electrically controlled polarizers or filters, adjustable optical lenses, motors, shutters, etc.). The mechanical components 208 may include motors (or microelectronic mechanical systems "MEMS") to move various optical components, shutters, etc. The sensor 204 may convert light provided by the optical components 210 into electrical signals, which may be further processed by the electronic components 206.

As mentioned herein, miniature cameras for use in portable devices such as augmented reality (AR) / virtual reality (VR) glasses, smartphones, smartwatches, or similar, have design limitations with respect to power consumption, size, impact resistance, etc. Thus, smaller and fewer components are preferred. Furthermore, moving parts (i.e., mechanical components and/or moving optical components) may need to be avoided in order to provide higher impact resistance and reliability, as well as, lower power consumption.

Another design challenge with miniature cameras is how to handle magnification. While electronic magnification may be implemented by processing the electrical signals (e.g., in a digital signal processor "DSP"), electronic magnification usually degrades a quality of the image unless complex and potentially more power consuming image processors are used. Optical magnification through the use of different optical power lenses provides different magnification (zoom) levels. For examples, two or three different sets of optical lenses may be used to provide multiple optical magnifications, and electronic magnification may be used to adjust magnification between the optical magnification levels while maintaining image quality.

However, use of multiple sets of optical lenses in a single camera may add to size and weight of the camera, a design requirement. In some commercial applications such as smartphones, multiple cameras with different magnifications are used, but that approach may add to cost and complexity of the device while still adding to size and weight of the overall device.

In some examples, a camera assembly may include a lens assembly with two modules to perceive light from same viewing direction through a biprism. A first module may include two halves of different lens assemblies disposed together to provide two different optical paths and fields of view to obtain the two different optical magnifications. A second module may include a lens assembly common to the two halves of the first module. Thus, light received and subjected to two different optical magnifications in the first module at a distal end of the camera assembly may be further processed through the second module before being provided to a sensor.

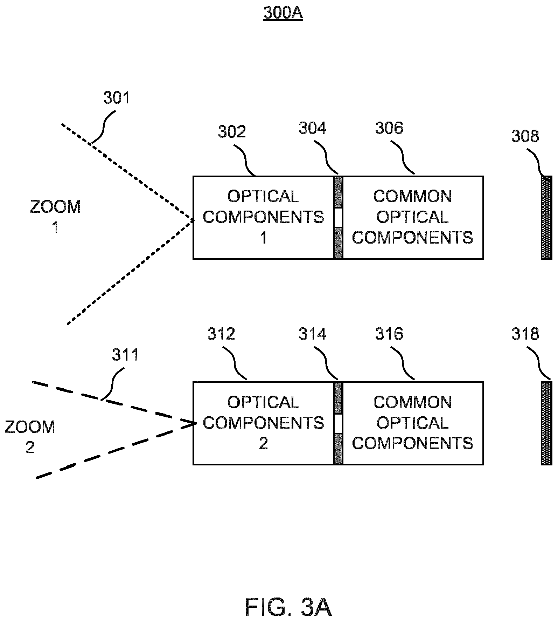

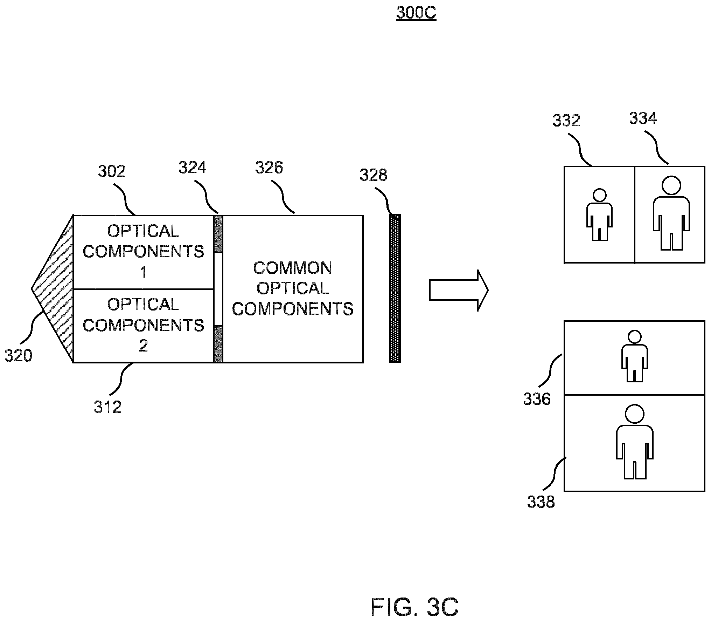

Figures 3A-3C illustrate distinct and common optical components of a camera for two different optical magnifications, a combination of the optical components into a single camera assembly, and different magnification views that may be achieved, according to an example.

Diagram 300A in Figure 3A shows two distinct optical magnification configurations. A first configuration may be for a first magnification (zoom 1) with a field of view (FOV) 301 provided by a first group of optical components 302 and a group of common optical components 306. An aperture 304 may be positioned between the first group of optical components 302 and the group of common optical components 306. The optically processed light may be provided to a sensor 308. A second configuration may be for a second magnification (zoom 2) with a field of view (FOV) 311 provided by a second group of optical components 312 and a group of common optical components 316. An aperture 314 may be positioned between the second group of optical components 312 and the group of common optical components 316. The optically processed light may be provided to a sensor 318.

A field of view (FOV) is a range of the observable world visible at any given time through the human eye, a camera, or on a display screen. It refers to the coverage of an entire area rather than a single, fixed focal point. The field of view (FOV) may be expressed as angular FOV in some examples. The field of view (FOV) may also be specified in degrees and shown as either horizontal x vertical or a diagonal measurement ("DFOV"). The larger the field of view (FOV), the larger the area that can be viewed. The field of view (FOV) may also be indirectly proportional to a magnification, where larger magnifications may correspond to smaller field of views (FOVs).

While any magnification levels or field of views (FOVs) may be configured through a selection of one or more optical lens types and their power levels, standardized levels may be used in commercial implementations. For example, 40DFOV (40-degree diagonal FOV), 80DFOV (80-degree diagonal FOV), or 120DFOV (120-degree diagonal FOV) may be used.

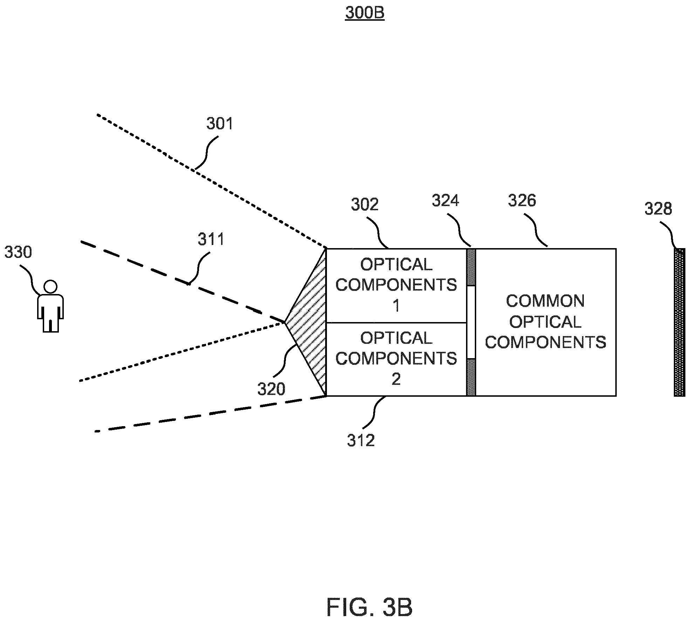

Diagram 300B in Figure 3B shows the combination of the optical component configurations into a single camera assembly, where the first group of optical components 302 and the second group of optical components 312 are aligned to receive light from an image 330 through the biprism 320, provide magnified images through a single aperture 324 to the group of common optical components 326 for further magnification and processing before the images are provided to the sensor 328.

In some examples, the biprism 320 may be arranged to overlap the viewing angles of its external surfaces such that the field of views (FOVs) of the first group of optical components 302 and the second group of optical components 312 overlap. Thus, both modules of the camera assembly are arranged to capture the same image, just with different magnifications.

Diagram 300C shows different magnification views that may be achieved through a camera assembly with two different magnifications. In the camera assembly with the aligned first group of optical components 302 and the second group of optical components 312, the aperture 324, the group of common optical components 326, and the biprism 320, the images with different magnifications may be aligned vertically (336, 338) or horizontally (332, 334) depending on an orientation of the sensor 328. The image orientation may be changed by changing (mechanically) an orientation of the sensor 328 or electronically once the images are captured by the sensor 328. Furthermore, image processing may crop either one to be displayed for the desired magnification.

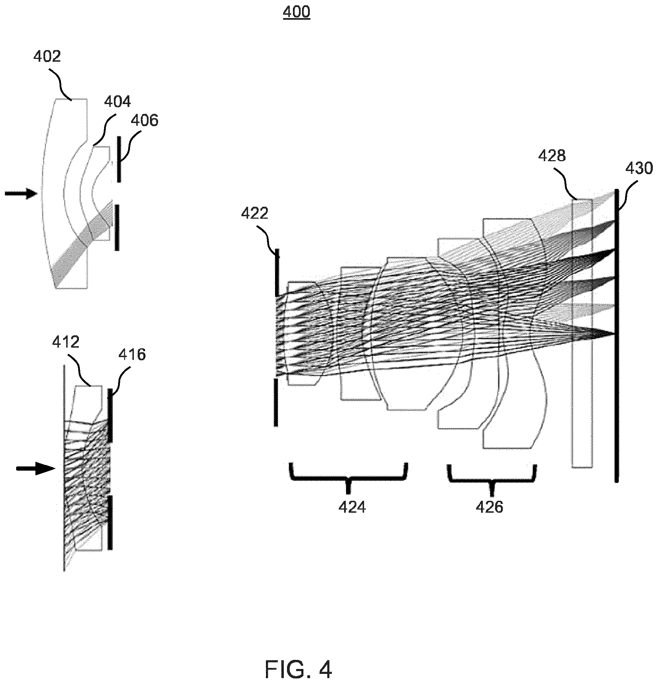

Figure 4 illustrates two different lens configurations for distinct optical magnifications and a common lens configuration to be used in combination with the two different lens configurations, according to an example.

Diagram 400 shows a first optical component assembly comprising a first negative optical power lens 402, a second negative optical power lens 404, and an aperture 406 at a proximal side to a sensor 430 of the camera assembly. A second optical assembly may include a negative optical power lens 412 and aperture 416. A common optical assembly may include an aperture 422, a first group of optical elements 424, a second group of optical elements 426. The camera assembly also includes a sensor 430.

In a practical implementation example, the first negative optical power lens 402 and the second negative optical power lens 404 of the first optical component assembly may change a diagonal field of view (DFOV) of the camera to 120DFOV with the small aperture 406 to maintain the same F-number (F/#) for image brightness matching. An F-number is a ratio of the camera assembly's focal length to the diameter of the entrance pupil ("clear aperture"). The negative optical power lens 412 of the second optical component assembly may change the diagonal field of view (DFOV) of the camera to 80DFOV with the aperture 416 larger than the aperture 406 to maintain the same F-number (F/#) for image brightness matching. The common optical assembly may have 40DFOV with the aperture 422 being the largest among the three apertures.

In some examples, the first group of optical elements 424 may be used to provide a majority of the imaging power and to correct spherical and chromatic aberrations. The second group of optical elements 426 may be used as field flattener to correct distortion and other remaining aberrations. The optical errors and aberrations may include two-dimensional optical errors, three-dimensional optical errors, or any combination thereof. Examples of two-dimensional errors may include barrel distortion, pincushion distortion, longitudinal chromatic aberration, and/or transverse chromatic aberration. Examples of three-dimensional errors may include spherical aberration, chromatic aberration field curvature, and astigmatism.

The optical lenses in the first and second optical component assemblies, as well as, the first and second group of optical elements (of the common optical assembly) may be any suitable optical lens such as concave, plano-concave, plano-convex, concave-convex, and others. The optical component assemblies may include a single optical element or any number of combinations of various optical elements as well as mechanical couplings to maintain relative spacing and orientation of the optical elements in the combination.

In some examples, one or more optical elements may have an optical coating, such as an anti-reflective coating, a reflective coating, a filtering coating, and/or a combination of different optical coatings. Furthermore, other optical elements such as filters, polarizers, and comparable elements may also be included in the assemblies.

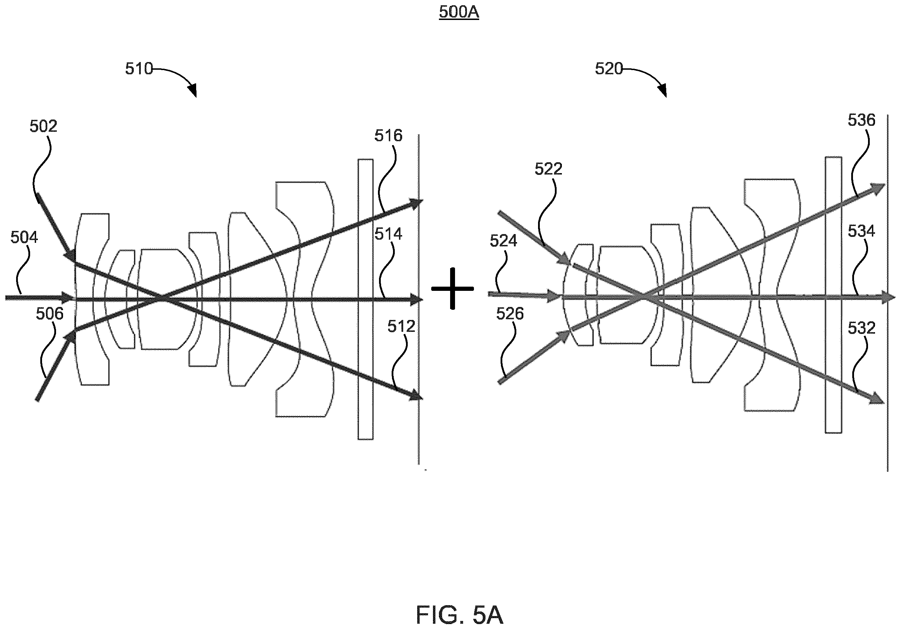

Figure 5A illustrates two different lens configurations for distinct optical magnifications, according to an example. Diagram 500A shows paths of three different light beams through a first optical component assembly 510 and a second optical component assembly 520. A light beam 502 arriving at an angle to a first optical lens of the first optical component assembly 510 may pass through all optical lenses of the first optical component assembly 510 and arrive at an angle as light beam 512 at the sensor. Similarly, a light beam 506 arriving at an angle to the first optical lens of the first optical component assembly 510 may pass through all optical lenses of the first optical component assembly 510 and arrive at an angle as light beam 516 at the sensor. The light beams 502 and 506 (and light beams 512 and 516) represent outer boundaries of the field of view for the first optical component assembly 510. A light beam 504 arriving at a normal angle to the first optical lens may pass straight through the first optical component assembly 510 and arrive at the sensor as light beam 514.

A light beam 522 arriving at an angle to a first optical lens of the second optical component assembly 520 may pass through all optical lenses of the second optical component assembly 520 and arrive at an angle as light beam 532 at the sensor. Similarly, a light beam 526 arriving at an angle to the first optical lens of the second optical component assembly 520 may pass through all optical lenses of the second optical component assembly 520 and arrive at an angle as light beam 536 at the sensor. The light beams 522 and 526 (and light beams 532 and 536) represent outer boundaries of the field of view for the second optical component assembly 520. A light beam 524 arriving at a normal angle to the first optical lens may pass straight through the second optical component assembly 520 and arrive at the sensor as light beam 534.

As shown in the diagram, the arrival angles of the light beams 522 and 526 are narrower than the arrival angles of the light beams 502 and 506. The first optical component assembly 510 and the second optical component assembly 520 have different magnification lenses, thus they also have different fields of view (FOV).

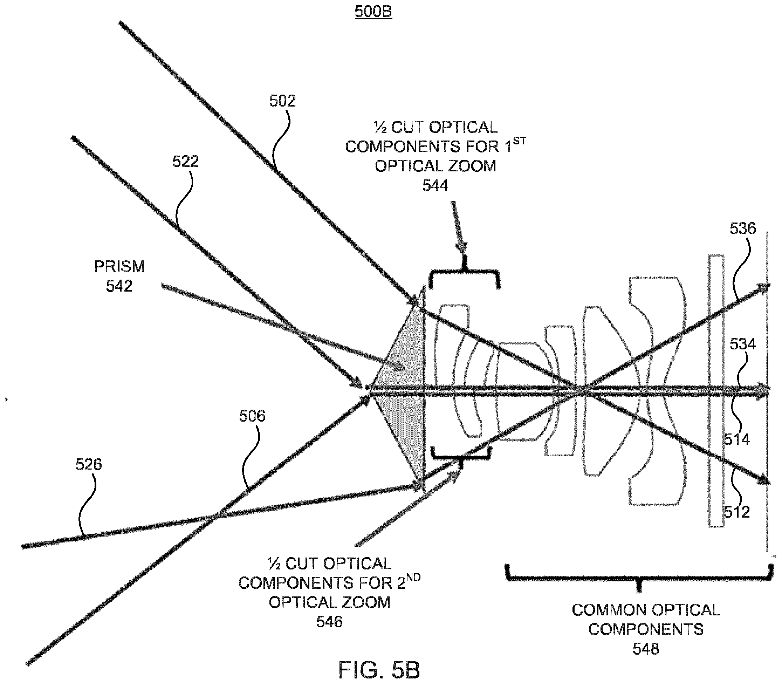

Figure 5B illustrates a combination of two different lens configurations for distinct optical magnifications and a common lens configuration, according to an example. Diagram 500B shows light beams 502 and 506 define the field of view (FOV) for the first magnification through a first external surface of the biprism 542. Light beams 522 and 526 define the field of view (FOV) for the second magnification through a second external surface of the biprism 542. The first and second magnifications may be provided by first half-cut optical components 544 and the second half-cut optical components 546. The half-cut components (i.e., optical lenses) may be positioned along their cut lines, such that magnified light beams are provided to the common optical components 548 before being forwarded to the sensor.

Because the magnifications are provided by half-cut optical lenses, the light beam 502 may arrive at the sensor as light beam 512 while light beam 506 may arrive at the sensor at a normal angle as light beam 514. Similarly, the light beam 522 may arrive at the sensor as light beam 532 while light beam 526 may arrive at the sensor at a normal angle as light beam 534.

In some examples, two optical magnifications may be achieved by one camera with only half (or less) envelope space compared to using two separate cameras. Each optical zoom image may have as good image resolution, contrast, and other image qualities compared to using two individual cameras. Furthermore, the camera does not need to have moving elements (for magnification). Cost and complexity of a host device may also be lower by reduction of the number of cameras.

In some cases, the field of view (FOV) of the camera may be smaller compared to using the entire sensor area due to use of approximately half of the sensor imaging area for each optical magnification image. To mitigate this potential reduction in performance, the optical lenses and/or the biprism may be designed to have bigger field of view (FOV). Alternatively, a larger sensor may be used.

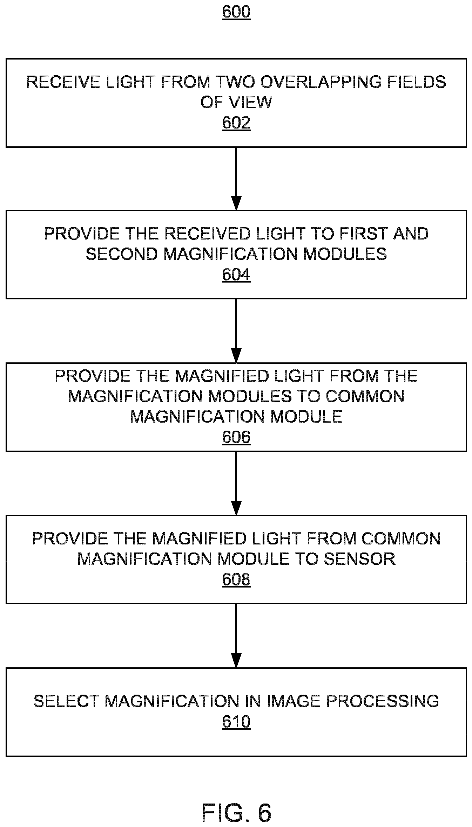

Figure 6 illustrates a flow diagram of a method for providing two distinct magnifications in a single camera, according to some examples. The method 600 is provided by way of example, as there may be a variety of ways to carry out the method described herein. Although the method 600 is primarily described as being performed by the components of Figure 3B, 4, and/or 5A-5B, the method 600 may be executed or otherwise performed by one or more processing components of another system or a combination of systems. Each block shown in Figure 6 may further represent one or more processes, methods, or subroutines, and one or more of the blocks (e.g., the selection process) may include machine readable instructions stored on a non-transitory computer readable medium and executed by a processor or other type of processing circuit to perform one or more operations described herein.

At block 602, light may be received from an environment through two external surfaces of a biprism. The biprism may be arranged such that the fields of view associated with both external surfaces overlap.

At block 604, The received light may be provided to first and second magnification modules of the camera, each of which may provide different magnification levels (e.g., 120 DFOV and 80DFOV). Because of the overlapping fields of view, both modules may magnify the same image in the overlapping area. The first and second magnification modules may be formed by one or more half-cut optical lenses each, and may be aligned along the cut-lines.

At block 606, the magnified light may be provided by the first and second magnification modules to the common magnification module. The common magnification module may provide an additional magnification (e.g., 40DFOV), as well as, other processing such as aberration corrections, distortion correction, flattening, etc.

At block 608, the magnified light may be provided from the common magnification module to a sensor of the camera. The sensor may convert the magnified (and otherwise processed) optical signals to electrical signals, which may be processed by electronic components of the camera such as a processor. The electronic components may select one of the two magnifications for display (or storage) at block 610. The magnified images may also be displayed side-by-side vertically or horizontally.

According to examples, a method of making a camera with two different lens configurations for distinct optical magnifications and a common lens configuration is described herein. A system of making the camera with two different lens configurations for distinct optical magnifications and a common lens configuration is also described herein. A non-transitory computer-readable storage medium may have an executable stored thereon, which when executed instructs a processor to perform the methods described herein.

In the foregoing description, various examples are described, including devices, systems, methods, and the like. For the purposes of explanation, specific details are set forth in order to provide a thorough understanding of examples of the disclosure. However, it will be apparent that various examples may be practiced without these specific details. For example, devices, systems, structures, assemblies, methods, and other components may be shown as components in block diagram form in order not to obscure the examples in unnecessary detail. In other instances, well-known devices, processes, systems, structures, and techniques may be shown without necessary detail in order to avoid obscuring the examples.

The figures and description are not intended to be restrictive. The terms and expressions that have been employed in this disclosure are used as terms of description and not of limitation, and there is no intention in the use of such terms and expressions of excluding any equivalents of the features shown and described or portions thereof. The word "example" is used herein to mean "serving as an example, instance, or illustration." Any embodiment or design described herein as "example' is not necessarily to be construed as preferred or advantageous over other embodiments or designs.

Although the methods and systems as described herein may be directed mainly to digital content, such as videos or interactive media, it should be appreciated that the methods and systems as described herein may be used for other types of content or scenarios as well. Other applications or uses of the methods and systems as described herein may also include social networking, marketing, content-based recommendation engines, and/or other types of knowledge or data-driven systems.

## Claims

1. A camera assembly, comprising:
a first magnification module comprising a first set of at least one partial optical lens;
a second magnification module comprising a second set of at least one partial optical lens, wherein the first set of the at least one partial optical lens and the second set of the at least one partial optical lens are aligned along their respective cut lines;
a common magnification module comprising a third set of at least one complete optical lens, wherein the common magnification module is arranged to receive light from the first magnification module and the second magnification module; and
a sensor to receive light from the common magnification module.

2. The camera assembly of claim 1, further comprising a biprism to adjust fields of view (FOVs) of the first magnification module and the second magnification module to overlap at least partially.

3. The camera assembly of claim 1 or 2, wherein the first set of the at least one partial optical lens and the second set of the at least one partial optical lens comprise half-cut optical lenses.

4. The camera assembly according to any of the preceding claims, wherein
the first magnification module provides a first magnification of an object,
the second magnification module provides a second magnification of the object, and
the camera assembly further comprises a processor to select among the first magnification of the object and the second magnification of the object.

5. The camera assembly of claim 4, wherein the processor is further to display the first magnification of the object and the second magnification of the object side-by-side vertically.

6. The camera assembly of claim 4, wherein the processor is further to display the first magnification of the object and the second magnification of the object side-by-side horizontally.

7. The camera assembly according to any of the preceding claims, wherein the first set of the at least one partial optical lens, the second set of the at least one partial optical lens, and the third set of the at least one complete optical lens each comprise a concave optical lens, a convex optical lens, a plano-concave optical lens, a plano-convex optical lens, or a concave-convex optical lens.

8. The camera assembly according to any of the preceding claims, wherein at least one of the first magnification module, the second magnification module, or the common magnification module comprise at least one of an optical filter, a polarizer, or a quarter wave plate; and/or preferably the third set of the at least one complete optical lens is to provide at least one of spherical aberration correction, chromatics aberration correction, distortion correction, or flattening.

9. A method comprising:
receiving light from an overlapping area of two distinct fields of view (FOVs) at a biprism;
providing a first magnification to the received light through a first magnification module comprising a first set of at least one partial optical lens;
providing a second magnification to the received light through a second magnification module comprising a second set of at least one partial optical lens, wherein the first set of the at least one partial optical lens and the second set of the at least one partial optical lens are aligned along their respective cut lines;
providing the light with the first magnification and the light with the second magnification to a sensor through a common magnification module comprising a third set of at least one complete optical lens.

10. The method of claim 9, further comprising:
providing one or more of spherical aberration correction, chromatics aberration correction, distortion correction, or flattening through the common magnification module; and/or preferably the first set of the at least one partial optical lens and the second set of the at least one partial optical lens are half-cut optical lenses.

11. The method of claim 9 or 10, further comprising:
selecting among two images generated from the light with the first magnification and the light with the second magnification; and/or preferably the method further comprising:
displaying the two images generated from the light with the first magnification and the light with the second magnification side-by-side vertically or horizontally.

12. A lens assembly, comprising:
a first magnification module comprising a first set of at least one partial optical lens;
a second magnification module comprising a second set of at least one partial optical lens, wherein the first set of the at least one partial optical lens and the second set of the at least one partial optical lens are aligned along their respective cut lines; and
a common magnification module comprising a third set of at least one complete optical lens, wherein the common magnification module is arranged to receive light from the first magnification module and the second magnification module, and to provide the light to a camera sensor.

13. The lens assembly of claim 12, further comprising a biprism to adjust fields of view (FOVs) of the first magnification module and the second magnification module to overlap at least partially; and/or preferably the first set of the at least one partial optical lens and the second set of the at least one partial optical lens comprise half-cut optical lenses.

14. The lens assembly of claim 12 or 13, wherein
the first magnification module provides a first magnification of an object, and
the second magnification module provides a second magnification of the object such that the first magnification of the object and the second magnification of the object are selectable for presentation; and/or preferably the first magnification of the object and the second magnification of the object are displayable side-by-side vertically or horizontally.

15. The lens assembly according to any of the claims 12 to 15, wherein the third set of the at least one complete optical lens is to provide at least one of spherical aberration correction, chromatics aberration correction, distortion correction, or flattening.
